(19) Europäisches Patentamt
European Patent Office
Office européen des brevets

(11) EP 1 538 168 A1

(12) EUROPEAN PATENT APPLICATION
published in accordance with Art. 158(3) EPC

(43) Date of publication:
**08.06.2005 Bulletin 2005/23**

(21) Application number: **02738183.9**

(22) Date of filing: **07.06.2002**

(51) Int Cl.[7]: **C08F 214/18**, C08F 214/26, C08F 216/14, C08F 2/06, C08L 27/18, C25B 13/08

(86) International application number:
**PCT/ES2002/000279**

(87) International publication number:
**WO 2003/104293 (18.12.2003 Gazette 2003/51)**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **DAVID FUEL CELL COMPONENTS, S.L.**
**40140 Valverde del Majano (Segovia) (ES)**

(72) Inventors:
- **BLACH VIZOSO, Ricardo**
  **E-40140 Valverde Del Majano (ES)**
- **JAUREGUI ABRISQUETA, Angel**
  **E-40140 Valverde Del Majano (ES)**

(74) Representative: **Carpintero Lopez, Francisco**
**HERRERO & ASOCIADOS, S.L.**
**Alcalá, 35**
**28014 Madrid (ES)**

# (54) METHOD OF OBTAINING PERFLUOROSULPHONATE POLYMERS CONTAINING SULPHONYL FUNCTIONAL GROUPS

(57) The present invention refers to a method of obtaining perfluorocarbonate polymers containing functional fluorosulphonyl groups and that have structural formula (I) that consists in carrying out copolymerization between tetrafluoroethylene and a perfluorovinylic ether in a fluorated organic solvent medium, in the presence of a radical type starter with additional input of tetrafluoroethylene during the copolymerization process, **characterized** because before starting the copolymerization reaction a, previously synthesized, dispersion is introduced of a copolymer of tetrafluoroethylene and perfluorovinylic ether, in an organic solvent. The present invention also refers to the perfluorocarbonate polymer obtainable by the method of the invention and the use of this polymer to prepare ion-exchange membranes.

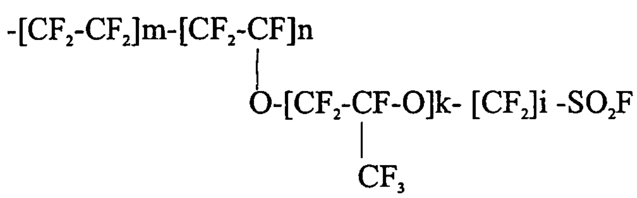

(I)

EP 1 538 168 A1

## Description

### Area of the invention.

The invention refers to obtaining perfluorate polymers that contain fluorosulphonyl functional groups and, especially, to a method of obtaining copolymers formed from tetrafluoroethylene (TFE) and a perfluorovinylic ether that contains the fluorosulphonyl functional group, with the latter having the capacity to be converted into an ion-exchange group after a series of treatments.

The invention also refers to the use of polymers obtained by the method of the present invention to manufacture cation-exchange membranes, which are used in Fuel Cells, in alkaline metal electrolysis, to manufacture liquid solutions to produce membranes etc; and the ion-exchange membranes that contain the polymers obtained by the method of the present invention.

### Background

The substrate to obtain fluorosulphonated ion-exchange membranes are generally perfluorate polymers, resulting from the interaction of two monomers: tetrafluoroethylene (TFE) and FC - 141, a polymer with structural formula:

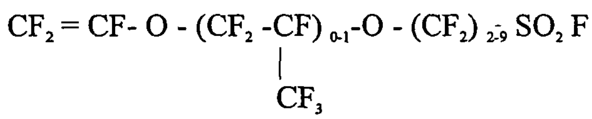

To synthesize the Nafion® polymer, the company DU PONT uses the following monomer:

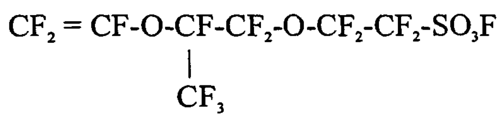

Synthesis of polymers is a complex and sophisticated technical process that requires special equipment and facilities, production areas etc. Production is schematically represented in the following flow chart:

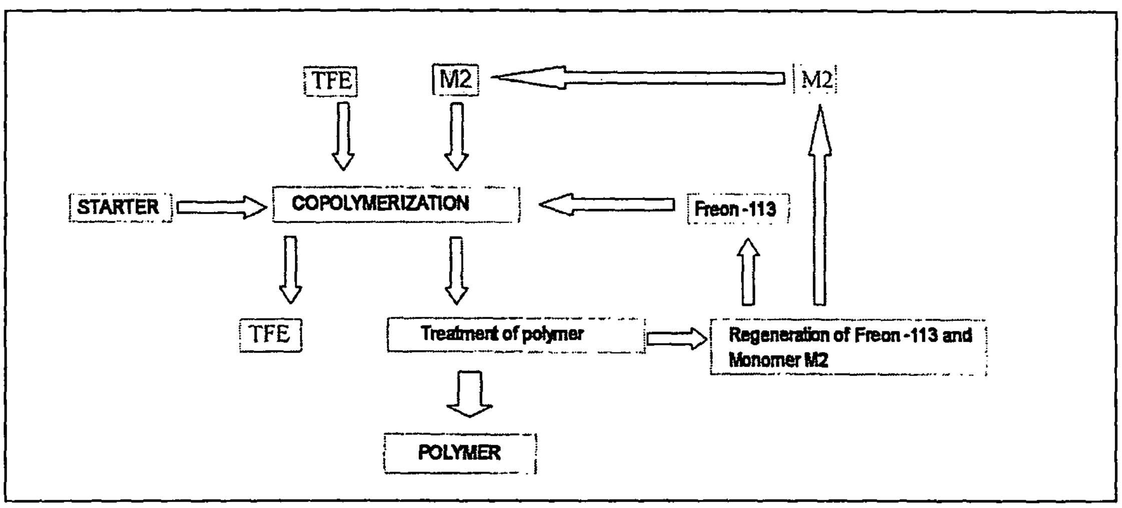


The method to obtain perfluorate polymers with fluorosulphonyl functional groups by copolymerization between TFE and a perfluorovinylic ether is already known (US patent N° 3282875, MKI 260-296, published on 01.11.66). Using perfluorodimethylcyclobutane as a fluorocarbonic solvent and in the presence of a fluorated starter radical, preferentially dinitrogen difluoride ($N_2F_2$), at 80°C and a specific pressure, polymers are produced with a 0.2-5% content

in perfluorovinylic ether with fluorosulphonyl groups, which can be used to obtain chemically resistant and thermally stable coatings, to manufacture fluorated membranes and as super-acid catalysts.

The drawbacks of this method are:

- The relatively high coploymerization temperature (80°), which leads to the creation of a low molecular weight polymer and increases the risk of the polymerization process exploding.
- The impossibility to manufacture products (films, fibers, etc.) with high values of mechanical properties, owing to the low molecular mass of the polymer.
- The lack of uniformity in the composition of the polymer obtained.

The method to obtain fluorocarbonate polymers that contain fluorosulphonyl functional groups by copolymerization of TFE and the perfluorovinylic ether of structural formula

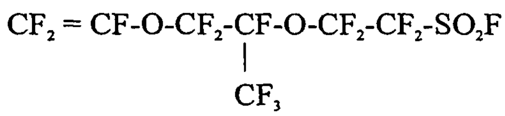

is also known (Federal Russian patent N° 2138515, MPK CO8 214/26, CO8 S 5/22, published on 27.09.99). The reaction is carried out in the presence of a hydroperoxide type fluorated starter, such as perfluoropropionylperoxide, working at a temperature of between 0 and 20° C and with addition of TFE, until 12% of the perfluorovinylic molecules are converted into fluorated copolymers of which resistant films can be obtained with good physicomechanical properties.

The drawbacks of this method are:

- Low conversion of the perfluorovinylic ether monomer (12%), which reduces the productivity of the process and increases the recovery costs of the monomer.
- Reduced speed of the process, because this is done at a polymerization temperature of 0-20 °C, when the starter, perfluoropropionylperoxide (the only one described in Russian patent N° 2138515) has a decomposition temperature of 40-50°C.
- Insufficient thermal stability of the polymer, since the terminal groups $C_2F_5COO^-$ created during the decomposition of the starter are, in turn, decomposed at a temperature of around 10-20°C below the melting point, therefore, reducing its quality.

The method of obtaining the perfluorate polymer by copolymerization of TFE and of the perfluorate monomer that contains the fluorosulphonyl group in the lateral chain of the perfluorovinylic ether, in an aqueous emulsion and in the presence of a starter of radicalic polymerization is well known (Russian patent N° 1233804 CO9F 214/26 CO8 S 5/22, published on 23.05.86) where, preferably, a potassium, sodium or ammonium persulphate buffer solution is used, and as an accelerator of the reaction copper sulphate is used and a fluorated surfactant compound (ammonium perfluoroctanate) at a temperature of 40°C. The pressure of TFE is controlled so as to ensure a uniform copolymerization rate. The following is used as perfluorovinylic ether:

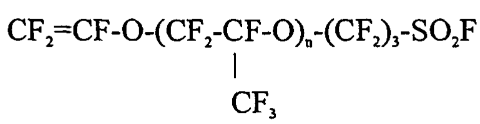

Where n = 0 or 1

The ratio of the TFE monomers to the perfluorovinylic ether in the copolymer ranges from 6.0 to 8.9. The polymer obtained is hydrolyzed to confer it ion-exchange potential (terminal $SO_3Me$ are obtained, where Me is an alkaline metal). With the method of the Russian patent N° 1233804 perfluorate polymers can be obtained with an ion exchange potential of 0.72 to 1.08 mg-equivalents/g, corresponding to an equivalent mass of 926-1389. The polymers obtained are useful to obtain membranes that are used in electrolytic processes especially in the electrolysis of alkaline chlorides.

The drawbacks of the method of the Russian patent N° 1233804 are:

- Presence in the polymer obtained of additives provided by the emulsifying agent used in the synthesis of copper sulphate and the presence of unstable terminal sulphate groups, whether these be potassium, sodium or ammonium sulphate. These factors impair the thermal stability and the solubility of the polymer.
- Difficulty to regulate the properties of the polymer obtained, due to its composition, such as the molecular mass, the crystallinity index, the density etc., since, according to this patent, the properties of the polymer can only be regulated by changing the concentration of the reagents (see examples 1 and 4 of the description of the cited patent).
- Limited areas of application of the patent because, owing to its high molecular mass, it is impossible to obtain products from these polymers with reduced thickness (less than 100 µm) as films, hollow fibers etc., since one property associated with the molecular mass is the Melt Flow Index, MFI, that is equivalent to 0.2 g/10 min. at 275° C. Moreover, it is impossible to obtain solutions with high polymer concentrations (more than 5% in mass) in solvents (isopropanol, ethanol, dimethylformamide, butanol, etc.) to be used to manufacture membranes with a thickness of 30-100 µm, hollow fibers (with a wall thickness of 20-100 µm), impregnated paper, fabrics etc.

The most similar method to the one followed in this invention is the one described in the Russian patent N° 721006 (MPK CO8F 8/32, published on 05.03.1980) according to which the perfluorocarbonated polymers with fluorosulphonyl functional groups are synthesized by copolymerization between a fluorated ethylene, preferentially tetrafluoroethylene and a simple perfluorovinylic ether, that contains the fluorosulphonyl group, in an organic solvent that contains fluoride, for example 1,1,2-trichloro-1,2,2-trifluorethane (freon-113), perfluoromethylcyclohexane, perfluorodimethylcyclobutane, at a temperature of 45°C and a pressure of 3-7 kg/cm$^2$ that is maintained by a continual additional input of TFE in the copolymerization process (see examples 1 and 3 of the description of Russian patent N° 721006). For the perfluorovinylic ether with fluorosulphonyl groups, ethers with the following structural formulae are used:

$FSO_2$-$CF_2$-$CF_2$-O-CF=$CF_2$

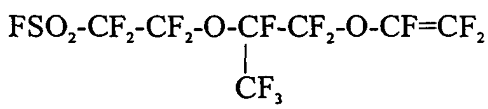

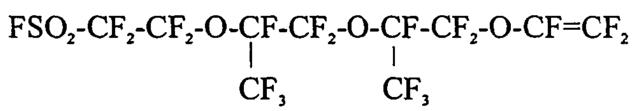

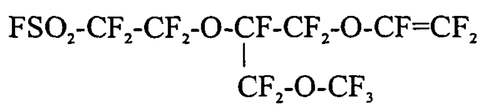

The polymer obtained is hydrolyzed to transform the fluorosulphonyl groups into groups capable of cation-exchange.

Depending on the pressure of TFE created, polymers with an exchange capacity (EC) of 0.68; 0.74 and 0.91 mg-equiv./g. are produced. It is preferable to use polymers with an EM=1000-1500. The physicomechanical properties of the polymers obtained such as the melt flow index (MFI), mean molecular mass in mass ($\bar{M}_w$), mean molecular mass in number ($\bar{M}_n$), the $\bar{M}_w/\bar{M}_n$ ratio, crystallinity index or the density are not specified in the said patent.

The method described in Russian patent N° 721006 can be used to obtain polymers of value to manufacture membranes used in electrolytic processes of alkaline chlorides and in the electrolysis of halogenated aqueous solutions of alkaline metals, since the membranes obtained from this polymer have acceptable mechanical properties and a low electrical resistance.

Some of the drawbacks of this patent are:

- The limited area of application of the polymers obtained, owing to the difficulty to manufacture products with reduced thickness (less than 80 µm), such as films, hollow fibers etc., and the impossibility to obtain solutions with concentrations of 5% in mass in organic solvents (isopropanol, ethanol, dimethylformamide, acetone, methylpyrrolidone, etc.).
- According to our experiments, polymeric properties such as molecular mass and the ratio between the molecular mass and the mean molar mass in number, reflect that these are unsuitable for application in the manufacture of membranes for fuel cells and for the manufacture of polymeric solutions in concentrations higher than 5%.
- The polymer with a EC = 0.71 mg.equivalents/g has a crystallinity index of 22 % and a density of 0.997 g/cm$^3$. That of EC = 0.91 has one of 12% and 0.898 and that of EC = 0.80, one of 19% and 0.993 respectively.
- As our experiments show, it is frequent that the polymer obtained contains fractions with a high molecular mass (IFF=0.2-8 g/10 min.), an excessively high crystallinity index (12-22%) and a density of 0.989-0.997 g/cm$^3$, which makes it difficult to choose the appropriate extrusion temperature and reduce the productivity of the process followed to obtain products with reduced thicknesses. Similarly, it prevents the polymer from dissolving in concentrations above 5% in organic solvents.
- Regulation of the properties, such as $\overline{M}_w$, the ratio $\overline{M}_w/\overline{M}_n$ of the polymer obtained, is very difficult since in the process used to obtain the patent, this regulation is only possible by changing the concentration of the starter, the sulphonomer concentration, or the pressure at which the TFE is introduced.
- The polymer obtained has a low thermal and chemical stability, due to the presence of terminal groups $C_2F_5COO^-$ that are thermally and chemically unstable. These groups are formed in large quantities in the breakdown of perfluoropropionylperoxide, used as a starter of polymerization.

## Description of the invention

The polymers with fluorosulphonyl functional groups are obtained by the method described in this invention, which consists of a method of obtaining perfluorocarbonate polymers that contain fluorosulphonyl functional groups and that respond to structural formula (I):

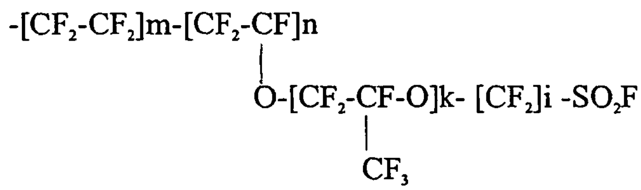

(I)

that consists in a radical copolymerization between tetrafluoroethylene and a perfluorovinylic ether in a fluorated organic solvent medium, in the presence of a radical type starter and with additional input of tetrafluoroethylene during the copolymerization process, characterized because before starting the copolymerization reaction, a previously synthesized dispersion of the tetrafluoroethylene copolymer and perfluorovinylic ether in an organic solvent is introduced.
The composition and properties of the polymers obtained are defined by the ratio between the monomers used and by the synthesis conditions.
The perfluorovinylic ether used in the synthesis is preferably [4-methyl-3,6-dioxa-7-octene-1-fluorosulphonyl] (FC-141) perfluoride, which has the following formula:

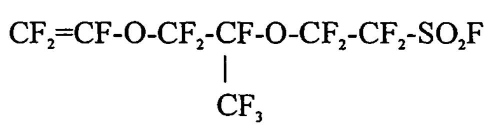

Properties of the monomers:

| Characteristics | TFE | M2 |
|---|---|---|
| Appearance | Gas | Transparent and odorless liquid |
| Content | >99.98 % in volume | >99.9 % in volume |
| Molecular mass | 100 | 446 |
| Boiling point | - | 134 °C |

Synthesis of the fluorated polymer is a complex process that is only possible in one of the formation steps of TFE, and in the formation of other fluoro-organic and fluoropolymer unions.
The most important drawback in manufacture of the polymer is synthesis of the FC-141 monomer. The synthesis requires special equipment including rectification columns connected to vacuum. The main components during synthesis are: TFE, hexafluorethylene and oleum (fuming sulphuric acid). Synthesis is only possible at the site of TFE production since this cannot be transported. The FC-141 is stored in tanks made of a special material. Approximately, 1 Tn of monomer FC-141 is consumed per ton of polymer.
The TFE requires a special synthesis since it is a gaseous and explosive compound that cannot be transported. Immediately after its manufacture it must be used or stored in special conditions. The use of TFE requires temperatures of up to -40°C. TFE consumption is higher than 8 Tn per 1 Tn of polymer.
Separation of the excess TFE after synthesis requires special purification equipment as well as a furnace to burn it if it cannot be reused.
The technological process that constitutes the objective of the invention guarantees that perfluorosulphocationic polymers can be obtained from fluorosulphonyl functional groups, with a series of properties (molecular weight, crystallinity index, density, etc.), which are kept constant, with a high thermal stability, which can be transformed into different products and that have the following properties:

| | |
|---|---|
| ➢ Appearance | White or light grey granules or powder |
| ➢ Melt Flow Index (MFI) g/10 min. | 2 - 50 |
| ➢ Volatile (% in mass) | Less than 0.1 |
| ➢ Exchange capacity (mg. Equivalents/g.) | 0.65 - 1.1 |

The polymer is synthesized in a special reactor located in a shielded cabin. The reactor, which has a stirring device and a special steel jacket, is designed to work at pressures of up to 100 kg/cm$^2$ and has regulation and control devices.
The polymer is treated in the following steps:

- Extraction by distillation with monomer FC-141 and Freon 113,
- Drying of the polymer using special dryers.
- And, if necessary, dispersion.

Uptake of Freon 113 is higher than 3 Tn per Tn of polymer.
The FC-141 and Freon 113 recovery equipment includes a rectification column under vacuum.
The process to obtain perfluorosulphocationic polymers containing fluorosulphonyl groups, is performed by copolymerization of the tetrafluoroethylene polymer with the perfluorovinylic ether, the monomer that contains the fluorosulphonyl functional group, in fluorated organic medium in the presence of a radical type starter and with additional

input of tetrafluoroethylene during the copolymerization process, characterized because before starting the copolymerization reaction a previously synthesized dispersion of the tetrafluoroethylene copolymer and perfluorovinylic ether is introduced in an organic solvent.

The organic solvent is preferably a perfluorate organic solvent and even more preferably 1,1,2-trichloro-1,2,2-trifluoroethane (freon-113).

The radical type starter is, preferably, a fluorated peroxide and, more preferably, perfluorocyclohexanoyl peroxide or perfluoropropionyl peroxide.

The polymers obtained have the following structural formula:

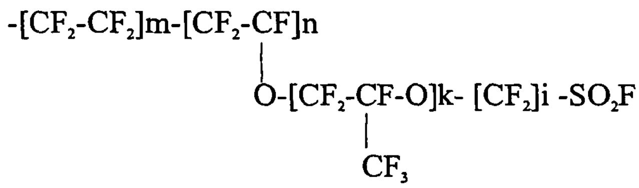

Where n = 4 - 16.5 % mol
m = 83.5 - 96 % mol

In practice, fluorated polymers are used with i=2 and k= 1.

Reaction mechanism:

The polymer is obtained by gradually adding monomeric TFE (M1) to the perfluorovinylic monomer (M2) in the presence of a radical type starter. This is a radicalic mechanism that has the following steps:

**1.Decomposition of the starter**

$$R \xrightarrow[\text{i) T (°C)}]{} R^* \quad (\text{* radical or free electrons})$$

**2.Start**

$$R^* + M1 \xrightarrow[\text{ii)T (°C), Pressure (atm)}]{} R\text{-}M1^*$$

**3.Growth of chain**

$$R\text{-}M1^* + nM1 \xrightarrow[\text{iii)T(°C), Pressure (atm)}]{} R\text{-}(M1)_n\text{-}M1^*$$

$$R\text{-}(M1)_n\text{-}M1^* + M2 \xrightarrow[\text{iv)T(°C), Pressure (atm)}]{} R\text{-}(M1)_{n+1}\text{-}M2^*$$

**4.End of chain**

$$R\text{-}(M1)_{n+1}\text{-}M2^{*} + m(M1) \longrightarrow R(M1)_{n+1}\text{-}M2\text{-}(M1)_{m}$$

vi)T (°C), Pressure (atm)

By changing the correlation of monomers, type of starters, process temperatures, pressure and other parameters, polymers with different proportions of "n" and "m" can be obtained.

Perfluorosulphopolymer is obtained by a continuous process that is carried out in a polymerizer reactor with stirring, cooling and heating devices.

The process followed to obtain the polymer is based on copolymerization of the suspension of M1 and M2, in a fluorated solvent and consists of the following steps:

- Preparation of the initial compounds.
- Loading the compounds.
- Copolymerization.
- Separation of the polymer.
- Washing the polymer.
- Drying the polymer.

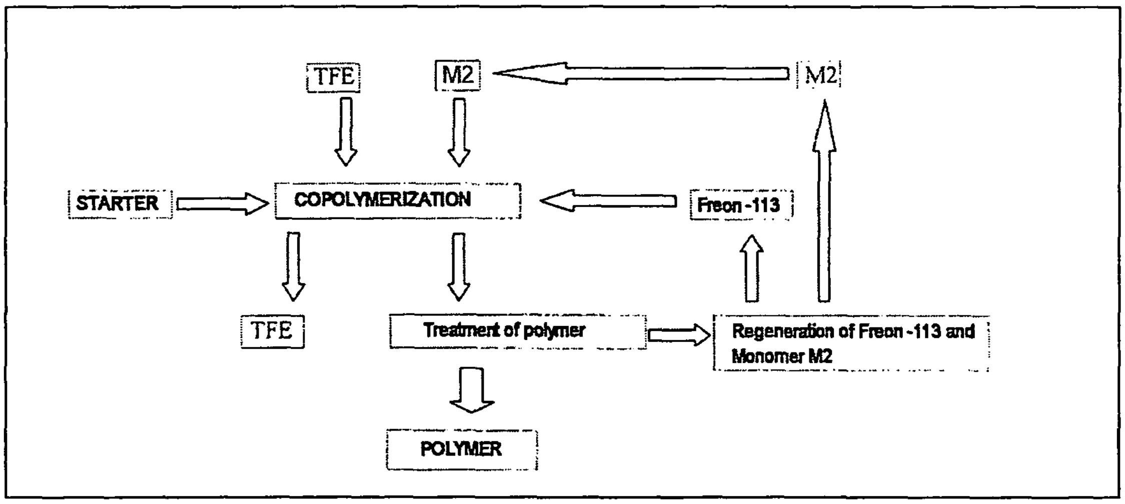


Fig. Diagram of the process.

In organic solvent, with the action of a radicalic type starter (e.g. a perfluorate peroxide), TFE is gradually added to the reactor during the process in order to maintain a constant preestablished pressure of copolymerization. Before starting the copolymerization, a dispersion of the copolymer of TFE and perfluorovinylic ether is added, preferably with a concentration of between 15 and 20% in a perfluorated organic solvent. The proportion of this dispersion relative to the total reagent is, preferably, between 0.03 and 0.06 %.

Perfluorocyclohexanoyl (PFCHP) can be used as perfluorate peroxide, preferably at a temperature of 30-32°C and a pressure of 2.0-3.5 Mpa, or perfluoropropionyl peroxide (PFPP), preferably at a temperature of 70-80°C and a pressure of 9-14 MPa. Other perfluorate peroxides can also be used.

One of the most important characteristics of the invention is that, before starting the process of copolymerization of TFE with the perfluorovinylic ether in an organic solvent, a dispersion of the copolymer is added. This dispersion operates as a regulator of molecular mass. Addition of the dispersion of the TFE-perfluorovinylic ether is preferably carried out in a proportion of above 0.03%, since the properties of the polymer obtained are not noticeably different from the properties of the polymer obtained when this is not used. It is not advisable to add more than 0.06 %, since the quality of the polymer does not improve and the uptake of the dispersion increases.

In the same synthesis conditions, other polymers with a different molecular weight can be obtained, depending on the amount of dispersion introduced. Because of this, following the method of the present invention, the polymers synthesized will have optimum values of molecular mass, mean molecular mass in number and mean molecular mass in weight, depending on their future use, whether this be their transformation into membranes or other forms or to

obtain solutions of the polymers in organic polar solvents or in mixtures of polar and non-polar organic solvents. Depending on the objectives, polymers can be obtained in EM ranges of 950-1500 with optimum physical and physicochemical properties such as those indicated below:

- $\overline{M}_w$=10,$\overline{M}_w$/$\overline{M}_n$=1.1-1.4
- IFF=7-30 g/10 min.
- Crystallinity index (7-20%).
- Resistance to membrane rupture with thicknesses of 50-220 µm is around 8-25 Mpa.
- The polymer has a uniform composition in the membranes obtained.

As mentioned previously, PFCHP, PFPP and other perfluorate peroxides can be used. Use of these peroxides is indicated, for example, when polymer TFE is obtained with hexafluoropropylene or polymer TFE with perfluoropropylvinylic ether. The copolymerization temperature is determined by the type of monomers used and can range from 30 to 80° C. The copolymerization temperature, created and maintained by input of TFE, is established in relation to the type of starter used and the composition of the polymer desired (the higher the TFE pressure corresponds to higher proportions of TFE in the polymer). Before starting the process, perfluorovinylic ether, monomeric TFE and the fluoroorganic solvent in which the perfluoroperoxide is dissolved, are added to the prepared reactor followed by addition of the estimated amount of dispersion.

The working pressure during the reaction process is maintained via a continuous input of TFE, without permitting the pressure to drop more than 0.2-0.5 atm after each input step. At the end of the process, the copolymer, the TFE-perfluorovinylic ether preparation as a dispersion and the unreacted perfluorovinylic ether are discharged from the reactor. The conversion rate of perfluorovinylic ether to copolymer is 40%.

The processing plant to obtain the perfluorate polymer has the following equipment:

- Polymerizer reactor equipped with stainless steel stirring, cooling and heating devices, with the capacity to operate at pressures of up to 100 atm.
- Equipment to eliminate the solvent and residual monomer M2.
- Equipment to recover the solvent.
- Rectifier equipment to recover the residual monomer M2
- Equipment to uptake residual monomer M1.
- Drier.

**Detailed description of the preferred production process of the polymer of the invention**

1. Loading the compounds and polymerization

With the stirrer in operation, the solvent is loaded (Freon 113) and the perfluoride monomer M2 [4-methyl-3,6-dioxa-7-octene-1-fluorosulphonyl], is cooled and a vacuum is applied to achieve a pressure of 20-30 mm Hg. Then, the first amount of M1 (TFE) is introduced. After loading, this is heated to a temperature of between 30-80°C and more monomer M1 is added until a pressure of 3-4 atm. is reached. The starter solution is introduced dropwise in the solvent. After loading, the dropper is washed twice with solvent, adding this to the reactor. After loading the starter, monomer M1 is introduced until a pressure of 3 to 12 atm. is achieved depending on the molecular mass of the polymer to be obtained. The introduction of TFE is fractionated depending on the drop in pressure, that should remain in the range of 0.05 - 0.55 atm. At the end of the process, this gradually decreases to reach 2.5 - 11.7 atm.

Before the copolymerization process, together with the solvent and monomer M2, a dispersion is introduced with a concentration of between 15 and 20%, previously synthesized in a perforated organic solvent, of copolymer M1 and M2 in a proportion of 0.03 to 0.06 % relative to the liquid reaction mass.

The polymerization time is from 15 - 35 hours.

2.Separation of the polymer

After all the preestablished amount of monomer (M1) has been added, the reactor is cooled to 10-15° C. The TFE that has not reacted is sent to the gas analyzer stirring constantly. After, the solvent is separated off and this is heated to 40-80°C. This is then connected to a vacuum and a pressure of 40 mm of Hg is applied, separating the M2 that has not reacted. All the separated substances are sent for stripping and stored in collectors to be used later. The remaining polymer is washed several times (4-6) with solvent to completely rinse off the monomer (the residual content of monomers in the copolymer must be less than 0.002% in weight).

3.Drying the polymer:

After purifying the polymer, the reactor is unloaded on a tray and taken for drying. The polymer is dried in a drying chamber at a temperature between 40 and 90° C. The polymer, arranged in thin layers, dries in 16-40 hours.
Safety measures for protection at work.
The process followed to obtain the perfluorate polymer has a risk of explosion and a series of precautions must be taken:

- Use of antideflagrant equipment.
- Location of the reactor—polymerizer in a reinforced cubicle
- Safety valve.
- Microprocessed control of the reaction parameters.
- Careful control of the cubicle atmosphere.
- Automatic emergency ventilation
- Fire safety equipment
- Personal safety equipment.

**Example I**

**Synthesis of the polymer in the laboratory.**

The following are added to a 1.3 l stainless steel reactor.

- 650 g. of Freon - 113
- 338 g perfluorovinylic ether
- 0.52 g of perfluorocyclohexanoyl peroxide in a 10% solution in Freon - 113.
- 108 grams TFE

The reactor contains Freon-113, together with all the perfluorovinylic ether and the starter solution. This is cooled to -30° C, and a vacuum is applied to achieve a residual pressure of 1 mm Hg. While stirring constantly, 44 g tetrafluoroethylene is added (TFE).
The reactor is then heated to 32°C and 64g of TFE is added gradually.
The polymerization process is maintained at a pressure of 2.9 atm. reduced gradually to 2.5 atm.
After finishing the process, the reactor is cooled to + 15°C, and the unreacted TFE is eliminated. The mixture is unloaded from the reactor and then the unreacted ether and Freon - 113 are extracted by distillation.
The polymer obtained is washed with Freon-113 and dried to + 80°C under vacuum.
A total of 174 g of polymer of equivalent mass (EM)= 1130 are obtained.
The polymer obtained is treated with alkali and acid to achieve the desired properties.

ALKALINE TREATMENT OF THE POLYMER

The treatment process includes the following steps:

- Alkaline treatment of the polymer;
- Rinsing the polymer with water;
- Drying and packaging the polymer.

*Alkaline treatment of the polymer.*

A solution is prepared of between 5 and 20% of sodium hydroxide (potassium or lithium hydroxide can also be used). This is introduced in the reactor and the stirring and cooling mechanisms are activated. The polymer is added.
This treatment transforms the fluorosulphonyl groups of the polymer into ion exchange groups ($MeSO_{3-}$, where Me = Na, K, Li, etc.) The process must be carried out at a constant temperature.

*Rinsing the polymer in water*

After alkaline treatment of the polymer, this is cooled and its contents sent to a Buchner filter where the alkaline solution is separated from the polymer powder. In the Buchner filter, the powder is washed with distilled water and

drained. After, it is stored in a stainless steel tank.

*Drying and packaging of the polymer*

After drying the polymer, the polymer powder is desiccated in CAPARONE bags (caprolactam bags) and kept at a suitable temperature for a specific period of time. The powder, after drying, is kept in polythene bags for future treatments.

ACID TREATMENT OF THE POLYMER

Acid treatment of the polymer includes the following operations:

- Treatment of the polymer with the acid.
- Washing the polymer in water.
- Drying.
- Packaging the polymer.

*Acid treatment of the polymer*

An acid solution is prepared (hydrochloric or nitric acid of between 5 and 20%). This is introduced in the reactor and the stirring and cooling mechanisms are activated. The polymer is introduced. This treatment transforms the $MeSO_3$- groups (where Me = Na, K, Li, etc) into $HSO_3$ groups. The process must be carried out at constant temperature.

*Washing the polymer in water*

After treating the polymer in acid, the reactor is cooled and its contents are sent to a Buchner filter where the acid solution is separated from the polymer powder. In the Buchner filter, the powder is washed with distilled water, drained and kept in a stainless steel container.

*Drying and packaging the polymer.*

After drying the polymer, the powder is dried in CAPRONE bags and kept at a suitable temperature for an appropriate period of time. The dried powder is kept in polythene bags for later treatments.

## Claims

**1.** A method to obtain perfluorocarbonate polymers that contain fluorosulphonyl functional groups and that have structural formula (I):

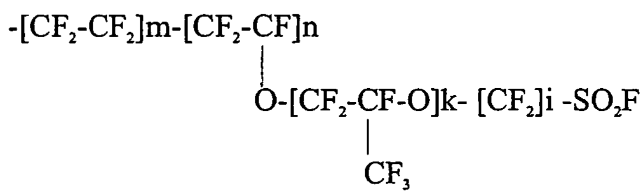

(I)

that consists in copolymerization between tetrafluoroethylene and a perfluorovinylic ether in a fluorated organic solvent medium, in the presence of a radical type starter with additional input of tetrafluoroethylene during the copolymerization process, **characterized** because before starting the copolymerization, a previously synthesized dispersion is introduced of the copolymer of tetrafluoroethylene and perfluorovinylic ether, in an organic solvent.

2. Method according to claim 1 in which the previously synthesized dispersion of the copolymer of tetrafluoroethylene and perfluorovinylic ether is prepared in a perfluorated organic solvent in a proportion of 0.03 - 0.06% of the liquid reagent mass.

3. Method according to claim 1 in which the previously synthesized dispersion of copolymer of tetrafluoroethylene and perfluorovinylic ether in the organic solvent presents a concentration of copolymer of between 10 and 20 % in mass of this solvent.

4. Method according to the previous claims in which perfluorovinylic ether is perfluoride [4-methyl-3,6-dioxa-7-octene-1-fluorosulphonyl] (FC-141)

5. Method according to the previous claims in which the organic solvent is 1,1,2-trichloro-1,2,2-trifluoroethane (freon-113).

6. Method according to previous claims in which for a radical type starter perfluorate peroxide is used.

7. Method according to claim 6 in which perfluorocyclohexanoyl peroxide is used as perfluorate peroxide.

8. Method according to claim 7 in which the copolymerization is carried out at a temperature of 30-35°C and a pressure of 0.31-0.25 MPa.

9. Method according to claim 6 in which perfluoropropionyl is used as fluorated peroxide.

10. Method according to claim 9 in which the copolymerization process is carried out at a temperature of 70-80°C and a pressure of 9-14 MPa.

11. Perfluorocarbonate polymer that contains fluorosulphonyl groups obtainable according to claims 1 to 10.

12. Use of perfluorocarbonate polymer according to claim 11 in the preparation of ion exchange membranes.

13. Ion exchange membrane that contains the perfluorocarbonate polymer according to claim 11.

## INTERNATIONAL SEARCH REPORT

International application No.
PCT/ES 02/00279

A. CLASSIFICATION OF SUBJECT MATTER

**IPC 7** C08F 214/18, 214/26, 216/14, 2/06, C08L 27/18, C25B 13/08

According to International Patent Classification (IPC) or to both national classification and IPC

B. FIELDS SEARCHED

Minimum documentation searched (classification system followed by classification symbols)

**IPC 7** C08F, C08J, C08L, C25B

Documentation searched other than minimum documentation to the extent that such documents are included in the fields searched

Electronic data base consulted during the international search (name of data base and, where practicable, search terms used)

EPODOC, DWPI, CAPLUS

C. DOCUMENTS CONSIDERED TO BE RELEVANT

| Category* | Citation of document, with indication, where appropriate, of the relevant passages | Relevant to claim No. |
|---|---|---|
| A | US 4151053 A (N. SEKO et al.) 24.04.1979, **Column 4, line 61-column 6, line 6, example 1** | 1-13 |
| A | JP 6234816 A (ASAHI GLASS Co. Ltd.) 23.08.1994 **(abstract)** World Patents Index **[on line]** Londres (Reino Unido): Derwent Publications, Ltd. **[recovered on 2003-02-06]. Recovered from :** EPODOC, EPO. DW 199438, Nº de acceso 1994-307652 | 1-13 |
| A | JP 9188795 A (ASAHI GLASS Co. Ltd.) 22.07.1997 **(abstract)** World Patents Index **[on line]** Londres (Reino Unido): Derwent Publications, Ltd. **[recovered on 2003-02-06]. Recovered from :** EPODOC, EPO. DW 199739, Nº de acceso 1997-420646 | 1-13 |
| A | US 4329434 A (K. KIMOTO et al.) 11.05.1982, **column 16, line 6-column 18, line 12, examples 19 and 28** | 1-13 |

☒ Further documents are listed in the continuation of Box C. ☐ See patent family annex.

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **11 February 2003 (11. 02. 03)** | **19 February 2003 (19. 02. 03)** |
| Name and mailing address of the ISA/<br>**S. P. T. O.**<br>Facsimile No. | Authorized officer<br><br>Telephone No. |

Form PCT/ISA/210 (second sheet) (July 1992)

**INTERNATIONAL SEARCH REPORT**

International application No.
PCT/ES 02/00279

C (Continuation). DOCUMENTS CONSIDERED TO BE RELEVANT

| Category* | Citation of document, with indication, where appropriate, of the relevant passages | Relevant to claim No. |
|---|---|---|
| A | ES 2154231 A (DAVID SYSTEMS TECHN.) 16.03.2001, page 4, lines 34-58, claims 1,2,5 | 1-11 |
| A | EP 345964 A (IMPERIAL CHEMICAL INDUSTRIES) 13.12.1989, page 5, lines 16-21, page 6, lines 28-37, claims | 1-13 |

Form PCT/ISA/210 (continuation of second sheet) (July 1992)

**INTERNATIONAL SEARCH REPORT**
Information on patent family members

International Application No
PCT/ES 02/00279

| Patent document cited in search report | Publication date | Patent familiy member(s) | Publication date |
|---|---|---|---|
| US 4151053 A | 24.04.1979 | SE 7607832 A | 10.01.1977 |
| | | NL 7607628 A | 11.01.1977 |
| | | NL 161789 B | 15.10.1979 |
| | | NL 161789 C | 18.04.1983 |
| | | DE 2630584 A,B | 13.01.1977 |
| | | FR 2317323 A,B | 04.02.1977 |
| | | JP 52024177 A | 23.02.1977 |
| | | JP 56037248 B | 29.08.1981 |
| | | JP 1091167 C | 31.03.1982 |
| | | JP 52024176 A | 23.02.1977 |
| | | JP 56018605 B | 30.04.1981 |
| | | JP 1159048 C | 25.07.1983 |
| | | JP 52119486 A | 06.10.1977 |
| | | JP 57007165 B | 09.02.1982 |
| | | JP 1115503 C | 29.09.1982 |
| | | BR 7604438 A | 31.01.1978 |
| | | GB 1523047 A | 31.08.1978 |
| | | SE 7907834 A | 21.09.1979 |
| | | NL 7904424 A | 28.09.1979 |
| | | NL 177220 B | 18.03.1985 |
| | | NL 177220 C | 16.08.1985 |
| | | SU 721006 A | 05.03.1980 |
| | | SU 828977 A | 07.05.1981 |
| | | SU 904527 A | 07.02.1982 |
| | | SU 925253 A | 30.04.1982 |
| | | IT 1061477 B | 28.02.1983 |
| | | CA 1152452 A | 23.08.1983 |
| | | SE 436048 B,C | 05.11.1984 |
| | | SE 446199 B,C | 18.08.1986 |
| | | CA 1213856 A | 11.11.1986 |
| | | CA1219399 A | 17.03.1987 |
| JP 6234816 A | 23.08.1994 | JP 2780590 B | 30.07.1998 |
| JP 9188795 A | 22.07.1997 | NINGUNO | |
| US 4329434 A | 11.05.1982 | NO 810162 A | 01.12.1980 |
| | | NO 810161 A | 01.12.1980 |
| | | NO 810160 A | 01.12.1980 |
| | | NO 154921 B | 06.10.1986 |
| | | NO 154921 C | 14.01.1987 |
| | | NO 810159 A | 01.12.1980 |
| | | NO 159174 B | 29.08.1988 |
| | | NO 159174C | 07.12.1988 |
| | | NO 801636 A | 01.12.1980 |
| | | NO 801637A | 01.12.1980 |
| | | NO 153398 B | 02.12.1985 |
| | | NO 153398 C | 12.03.1986 |
| | | PT 72131 A,B | 01.12.1980 |
| | | PT 72130 A,B | 01.12.1980 |
| | | FI 801734 A | 01.12.1980 |
| | | FI 68847 B | 31.07.1985 |
| | | FI 68847 C | 11.11.1985 |
| | | FI 801733 A | 01.12.1980 |
| | | FI 72530 B | 27.02.1987 |
| | | FI 72530C | 08.06.1987 |
| | | SE 8003901 A | 01.12.1980 |
| | | NL 8003170 A | 02.12.1980 |
| | | NL 187488 B | 16.05.1991 |
| | | NL 187488 C | 16.10.1991 |
| | | SE 8003902 A | 02.12.1980 |
| | | NL 8003174 A | 02.12.1980 |
| | | NL 184740 C | 16.10.1989 |
| | | JP 55160008 A | 12.12.1980 |

Form PCT/ISA/210 (patent family annex) (July 1992)

**INTERNATIONAL SEARCH REPORT**
Information on patent family members

International Application No
PCT/ES 02/00279

| Patent document cited in search report | Publication date | Patent familiy member(s) | Publication date |
| --- | --- | --- | --- |
| US 4329434 A (cont.) | 11.05.1982 | JP 61034726 B | 09.08.1986 |
| | | JP 1367351 C | 26.02.1987 |
| | | JP 55160007 A | 17.12.1980 |
| | | JP 61034725 B | 09.08.1986 |
| | | JP 1367344 C | 26.02.1987 |
| | | FR 2457880 A,B | 26.12.1980 |
| | | BR 8003403 A | 30.12.1980 |
| | | BR 8003432 A | 05.01.1981 |
| | | GB 2051831 A,B | 21.01.1981 |
| | | GB 2053902 A,B | 11.02.1981 |
| | | JP 56016460 A | 17.02.1981 |
| | | FR 2463123 A,B | 20.02.1981 |
| | | FR 2465718 A,B | 27.03.1981 |
| | | DE 3020017 A,C | 16.04.1981 |
| | | DE 3020057 A,C | 27.05.1981 |
| | | FR 2473533 A,B | 17.07.1981 |
| | | JP 56090054 A | 21.07.1981 |
| | | JP 59011581 B | 16.03.1984 |
| | | JP 1235865 C | 17.10.1984 |
| | | JP 56092263 A | 25.07.1981 |
| | | JP 59011582 B | 16.03.1984 |
| | | JP 1235866 C | 17.10.1984 |
| | | DE 3047439 A | 01.10.1981 |
| | | DE 3047438 A,C | 12.11.1981 |
| | | FR 2483431A,B | 04.12.1981 |
| | | US 4329435 A | 11.05.1982 |
| | | DE 3050439 A,C | 22.07.1982 |
| | | DE 3050634 A,C | 16.09.1982 |
| | | FR 2508039 A,B | 24.12.1982 |
| | | DE 3046501 A,C | 17.02.1983 |
| | | FR 2514010A,B | 08.04.1983 |
| | | CA 1148566 A | 21.06.1983 |
| | | GB 2118541 A,B | 02.11.1983 |
| | | GB 2123812 A,B | 08.02.1984 |
| | | SU 1080742 A | 15.03.1984 |
| | | CA 1168263 A | 29.05.1984 |
| | | IN 154418 A | 27.10.1984 |
| | | CA 1185398 A | 09.04.1985 |
| | | US 4510328 A | 09.04.1985 |
| | | US 4511518 A | 16.04.1985 |
| | | SU 1169530 A | 23.07.1985 |
| | | US 4536352 A | 20.08.1985 |
| | | US 4555369 A | 26.11.1985 |
| | | SU 1230464 A | 07.05.1986 |
| | | SU 1233804 A | 23.05.1986 |
| | | US 4597913 A | 01.07.1986 |
| | | US 4613467 A | 23.09.1986 |
| | | SU 1296007 A | 07.03.1987 |
| | | SE 449999 B,C | 01.06.1987 |
| | | SE 450000 B,C | 01.06.1987 |
| | | DE 3050782 C | 26.05.1988 |
| | | IT 1193943 B | 31.08.1988 |
| | | IT 1193942 B | 31.08.1988 |
| | | DE 3050643 C | 03.08.1989 |
| | | SU 1729295 A | 23.04.1992 |
| | | DE 3050931 C | 09.06.1994 |
| ES 2154231 A,B | 16.03.2001 | WO 0107517 A | 01.02.2001 |
| | | AU 5747399 A | 13.02.2001 |
| | | EP1209197 A | 29.05.2002 |
| | | BR 9917416 A | 02.07.2002 |
| | | CN 1367806 T | 04.09.2002 |

Form PCT/ISA/210 (patent family annex) (July 1992)

**INTERNATIONAL SEARCH REPORT**
Information on patent family members

International Application No
PCT/ES 02/00279

| Patent document cited in search report | Publication date | Patent familiy member(s) | Publication date |
|---|---|---|---|
| EP 345964 A | 13.12.1989 | FI 892824 A | 09.12.1989 |
| | | NO 892337 A | 11.12.1989 |
| | | AU 3617889 A | 14.12.1989 |
| | | CN 1038662 A | 10.01.1990 |
| | | BR 8902685 A | 23.01.1990 |
| | | ZW 7089 A | 14.02.1990 |
| | | JP 2056252 A | 26.02.1990 |
| | | ZA 8904028 A | 28.02.1990 |
| | | DD 283952 A | 31.10.1990 |
| | | AU 613202 B | 25.07.1991 |

Form PCT/ISA/210 (patent family annex) (July 1992)